# EUROPÄISCHE PATENTSCHRIFT

(11) **EP 2 673 535 B1**
(45) Veröffentlichungstag und Bekanntmachung des Hinweises auf die Patenterteilung: **30.11.2016**
(21) Anmeldenummer: 12718559.3
(22) Anmeldetag: 26.01.2012
(51) Int. Cl.: F16J 15/32

(54) **DICHTUNG FÜR EINE HYDRAULISCHE KOLBEN-ZYLINDER-ANORDNUNG**
SEAL FOR A HYDRAULIC PISTON-CYLINDER ARRANGEMENT
JOINT POUR UN ENSEMBLE PISTON-CYLINDRE HYDRAULIQUE

(30) Priorität: 10.02.2011 DE 102011010875
(43) Veröffentlichungstag der Anmeldung: 18.12.2013
(73) Patentinhaber: Schaeffler Technologies AG & Co. KG, 91074 Herzogenaurach (DE)
(72) Erfinder: SCHOCH, Armin, 77886 Lauf (DE); WAGNER, Philippe, F- 45000 Orléans (FR)
(86) Internationale Anmeldenummer: PCT/DE2012/000057
(87) Internationale Veröffentlichungsnummer: WO 2012/107015

(56) Entgegenhaltungen:
- DE-A1- 19 949 205
- US-A1- 2007 216 108
- US-A1- 2009 146 379
- US-A1- 2011 140 369

## Beschreibung

Die Erfindung betrifft einen Geberzylinder für eine hydraulische Kolben-Zylinder-Anordnung innerhalb einer hydraulischen Strecke zur Kupplungs- oder Bremsbetätigung.

Die Primärdichtung dient dazu, den Druckraum der jeweiligen Kolben-Zylinder-Anordnung zum drucklosen Nachlaufraum hin abzudichten, während die Sekundärdichtung den drucklosen Nachlaufraum zur Atmosphäre hin abdichtet. Grundsätzlich haben diese Dichtelemente einen Grundkörper und eine sich davon weg erstreckende Dichtlippe, die im eingebauten Zustand der Dichtung mit ihrer Dichtkontur mit einer relativ zum Dichtelement bewegbaren Lauffläche der Kolben-Zylinder-Anordnung zusammenwirkt. Bei einer Relativbewegung zwischen der Dichtlippe und der Lauffläche kommt es aufgrund von Reibung sowohl im Druckbereich als auch im Nachlaufbereich häufig zu Stick-Slip-Effekten, wobei sich die dynamische Dichtlippe zumindest teilweise über den Umfang der Lauffläche spannt und entspannt. Dadurch kann es zu Verformungen des Grundkörpers und zu einer ungewollten Geräuschbildung kommen.

Beispielsweise ist in der DE 100 28 672 A1 ein Dichtelement für hydraulische Kolben-ZylinderAnordnungen, insbesondere Geber- oder Nehmerzylinder von hydraulischen Kupplungsbetätigungs- oder Bremssystemen in Kraftfahrzeugen offenbart, welches einen Grundkörper und mit einer sich davon weg erstreckenden dynamischen Dichtlippe umfasst. Um einen Raum der Kolben-Zylinder-Anordnung abzudichten, wirkt die dynamische Dichtlippe des Dichtelements mit einer relativ zum Dichtelement bewegbaren Lauffläche zusammen. Der Grundkörper des Dichtelements ist dabei an einem komplementär ausgebildeten Stützring abstützt und weist eine konkav gekrümmte Dichtkontur auf. Nachteilig ist, dass es bei kostengünstigen, elastischen Dichtelementwerkstoffen zu einem verstärkten Verschleiß des Dichtelementes kommen kann, wodurch die Lebensdauer des Dichtelementes verringert werden kann. Zudem sind hoch elastische Dichtelemente nur begrenzt für den Hochdruckeinsatz geeignet.

Es ist die Aufgabe der Erfindung einer Geberzylinder bereitzustellen, welche im Niederdruckbereich und Hochdruckbereich eine ausreichende Dichtheit gewährleistet und mit welcher die Geräuschbildung, insbesondere durch den sogenannten Stick-Slip-Effekt, verringert werden kann.

Die Lösung der Aufgabe erfolgt erfindungsgemäß durch einer Geberzylinder mit den
Merkmalen des Anspruchs 1. Vorteilhafte Ausgestaltungen sind in den Unteransprüchen angegeben.

Der erfindungsgemäße Geberzylinde, insbesondere für eine hydraulische Kolben-Zylinder-Anordnung innerhalb einer hydraulischen Strecke zur Kupplungs- oder Bremsbetätigung, umfasst ein erstes Dichtelement, wobei das erste Dichtelement einen Grundkörper und mindestens einer ersten Dichtlippe aufweist, wobei die erste Dichtlippe sich von dem Grundkörper in Richtung eines Druckraumes erstreckt und eine erste Dichtkontur aufweist, wobei die erste Dichtkontur eine erste Fläche der Kolben-Zylinder-Anordnung zur Abdichtung kontaktiert, eine Armierung, wobei die Armierung an dem Grundkörper des ersten Dichtelementes anliegt und wobei die Armierung mindestens eine erste Auskragung aufweist. Erfindungsgemäß ist die erste Auskragung zwischen der ersten Dichtlippe und der ersten Fläche angeordnet und liegt zumindest teilweise an der ersten Dichtlippe an und wobei die erste Auskragung entlang der ersten Dichtlippe bis an die erste Dichtkontur heran ausgebildet ist.

Die Dichtung kann dabei in Form einer Primärdichtung und/oder einer Sekundärdichtung, beispielsweise in Form eines Radial-Wellendichtrings, in einem Zylindergehäuse angeordnet sein. Die Dichtung, in Form einer Primärdichtung, kann den Druckraum der jeweiligen Kolben-Zylinder-Anordnung zum drucklosen Nachlaufraum hin abdichten. Der drucklose Nachlaufraum kann zur Atmosphäre hin durch eine Dichtung in Form einer Sekundärdichtung abdichtet sein. Die Dichtung weist ein erstes Dichtungselement auf, wobei das erste Dichtungselement in Form einer Elastomerdichtung, beispielsweise aus Ethylen-Propylen-Dien-Monomer (EPDM) oder Hydriertem Acrylnitrilbutadien-Kautschuk (HNBR), hergestellt sein kann. Das erste Dichtelement weist einen Grundkörper auf. Der Grundkörper ist dabei im Wesentlichen auf der dem Druckraum abgewandten Seite des Dichtelementes angeordnet. Das Dichtelement ist ringförmig um eine Achse der Kolben-Zylinder-Anordnung, beispielsweise einer Längsachse des Kolbens oder Zylinders, herum ausgebildet und in einem Spalt zwischen dem Kolben und dem Zylinder und/oder einem Zylindergehäuse angeordnet. Von dem Grundkörper weg erstreckend sich eine erste Dichtlippe mit einer ersten Dichtkontur, wobei die erste Dichtlippe im eingebauten Zustand mit ihrer Dichtkontur mit einer relativ zum Dichtelement bewegbaren ersten Fläche der Kolben-Zylinder-Anordnung, beispielsweise des Kolbens, zusammenwirkt. Bei einem Druckunterschied zwischen den durch die Dichtung getrennten Bereichen kann die erste Dichtlippe dem Bereich mit höherem Druck zugewandt sein, wobei die erste Dichtlippe durch den Druckunterschied an die erste Fläche selbstverstärkend andrückbar ist. An dem Grundkörper des Dichtungselements liegt eine Armierung an, wobei die Armierung ringförmig um die Achse der Kolben-Zylinder-Anordnung herum ausgebildet ist. Die Armierung stützt das Dichtelement in axialer Richtung, um so eine übermäßige Verformung zu vermeiden. Die Armierung weist mindestens eine erste Auskragung auf, wobei diese erste Auskragung auf der dem Grundkörper des Dichtelementes zugewandten Seite der Armierung ringförmig umlaufend ausgebildet sein kann. Die erste Auskragung ist zumindest teilweise zwischen der ersten Dichtlippe und der ersten Fläche ausgebildet, wobei sich die erste Auskragung dabei im Wesentlichen parallel in axialer Richtung entlang der ersten Dichtlippe und der ersten Fläche erstreckt. Die erste Auskragung kann zumindest teilweise die erste Dichtlippe radial außenseitig, an einem der ersten Fläche zugewandten Bereich, kontaktieren. Die erste Auskragung erstreckt sich in axialer Richtung bis an die erste Dichtkontur heran. Dadurch ist der Grundkörper des Dichtelements zusätzlich zu der axialen Abstützung auch in radialer Richtung durch die Armierung abstützbar. Dadurch, dass die erste Auskragung des Stützelementes radial innenseitig den Grundkörper und/oder den Rückenbereich umfasst, kann eine zumindest teilweise radial nach außen, weg von dem Kolben, gerichtete Kraft auf das Dichtelement übertragen werden. Dadurch, dass die erste Auskragung der Armierung bis an die erste Dichtkontur heran ausgebildet ist, wird die Kontaktfläche des ersten Dichtelementes mit der ersten Fläche in axialer Richtung verringert. Durch die in axialer Richtung verringerte Kontaktfläche des Dichtelementes, beispielsweise in Form eines Elastomer-Dichtelementes, wird ein Haften der relativ zueinander bewegten ersten Dichtkontur und der ersten Fläche verringert, wodurch der sogenannte Stick-Slip-Effekt und damit eine Geräuschbildung vermieden werden kann.

In einer bevorzugten Ausgestaltung des erfindungsgemäßen Geberzylinder ist die erste Dichtkontur radial in Richtung der ersten Fläche wulstförmig ausgebildet. Die erste Dichtkontur weist dabei in einem nicht montierten Zustand radial außenseitig eine wulstförmige Ausbuchtung auf. In einem montierten Zustand kontaktiert die wulstförmige erste Dichtkontur die erste Fläche, wodurch es zu einer Verformung der wulstförmigen ersten Dichtkontur kommt. Dadurch wird die Anpresskraft der ersten Dichtkontur und damit der ersten Dichtlippe gegen die erste Fläche erhöht. Dadurch wird auch bei einem niedrigen Druck mit nur geringfügiger Selbstverstärkung der Dichtung die Dichtwirkung verbessert.

Vorzugsweise weist die erste Auskragung druckraumseitig eine erste Stirnfläche auf, wobei die erste Stirnfläche im Wesentlichen halbkreisförmig von der ersten Dichtlippe umfasst ist. Die erste Dichtlippe umfasst die erste Auskragung stirnseitig von radial innen halbkreisbogenförmig bis nach radial außen. Die erste Auskragung kann radial außenseitig eine Ausnehmung aufweisen, in welche die erste Dichtlippe derart aufgenommen wird, dass die erste Dichtlippe radial außenseitig mit der ersten Dichtkontur oberflächenbündig mit der radial außen liegenden Fläche der ersten Auskragung abschließt. Dadurch wird eine übermäßige Verformung der ersten Dichtlippe und der ersten Dichtkontur vermieden.

Besonders bevorzugt sind das erste Dichtelement und die Armierung verbindbar. Die Armierung kann stoffschlüssig, kraftschlüssig und/oder formschlüssig mit dem ersten Dichtelement, insbesondere dem Grundkörper und/oder der ersten Dichtlippe des ersten Dichtelementes verbunden sein. Das erste Dichtelement kann beispielsweise durch Aufvulkanisieren und/oder Umspritzen mit der Armierung verbunden werden. Das erste Dichtelement kann beispielsweise mittels einer formschlüssigen Clips-Verbindung und/oder durch Verkleben mit der Armierung verbunden werden. Das erste Dichtelement kann beispielsweise in Form einer Dichtlippe mit einer geringen axialen Ausdehnung im Bereich der Stirnseite der ersten Auskragung ausgebildet sein und beispielsweise durch Ausvulkanisieren mit der ersten Auskragung im Bereich der Stirnseite verbunden sein. Durch das Verbinden des ersten Dichtelementes und der Armierung sind zwischen den beiden Bauteilen Kräfte in unterschiedlichen Richtungen übertragbar, wodurch die Steifigkeit der Dichtung erhöht wird und beispielsweise das Einsetzen der Dichtung erleichtert wird, da das erste Dichtelement und die Armierung bereits zueinander ausgerichtet sind.

Vorzugsweise ist die Armierung als zweites Dichtelement ausgebildet, wobei das zweite Dichtelement mindestens eine zweite Dichtkontur zur Kontaktierung der ersten Fläche aufweist. Durch die Ausgestaltung der Armierung in Form eines zweiten Dichtelementes können beispielsweise unterschiedliche Dichtwerkstoffe für das erste Dichtelement und das zweite Dichtelement verwendet werden, wodurch eine Verbunddichtung ausgebildet wird, bei der beide Dichtelemente in Kontakt mit der ersten Fläche sind und zur Dichtwirkung beitragen. Dabei kann die erste Auskragung radial außen mit einer zweiten Dichtkontur die erste Fläche kontaktieren und wie eine zweite Dichtlippe wirken. Vorteilhaft ist, dass das erste Dichtelement und das zweite Dichtelement derart ausgebildet sein können, dass die Dichtelemente in unterschiedlichen Druckbereichen unterschiedliche Dichtwirkungen aufweisen können. So kann beispielsweise ein erstes Dichtelement in Form einer Elastomerdichtung eine gute Dichtwirkung bei niedrigem Druck gewährleisten und gleichzeitig die Toleranzempfindlichkeit der Dichtung gegenüber Fertigungsungenauigkeiten verringern. Das zweite Dichtelement, beispielsweise aus einem festeren Dichtwerkstoff, kann die Dichtwirkung bei einem hohen Druck, beispielsweise von 75 bar oder mehr, verbessern, wobei insbesondere die durch die selbstverstärkende Konstruktion der Dichtung auftretenden Kräfte besser aufgenommen werden und so eine übermäßige Verformung der Dichtung vermindert werden kann. Zudem kann durch die Verbunddichtung die Kontaktfläche des elastischen ersten Dichtelementes mit der ersten Fläche auf die zur Erzielung der Dichtwirkung benötigten Länge verringert werden, da auftretende Kräfte über das zweite Dichtelement aufgenommen werden. Dadurch kann der sogenannte Stick-Slip-Effekt und die Geräuschbildung vermieden werden.

In einer bevorzugten Ausführungsform ist das zweite Dichtelement in Form einer Thermoplast-Dichtung ausgebildet. Durch ein zweites Dichtelement aus einem Thermoplast-Kunststoff, beispielsweise Polyamid 12 (PA 12), welches unmittelbar an der ersten Fläche anliegt und beispielsweise bei einer Druckbeaufschlagung Kräfte auf die erste Fläche überträgt, wird ein Haften und Gleiten des zweiten Dichtelementes an der ersten Fläche vermieden, wodurch die Geräuschbildung aufgrund des Stick-Slip-Effektes vermieden werden kann.

Bevorzugt weist die zweite Dichtkontur radial in Richtung der ersten Fläche eine Profilierung auf. Die Profilierung kann beispielsweise in Form von Dellen und/oder Rillen ausgebildet sein, wobei die Rillen radialumfänglich außen in der zweiten Dichtkontur ausgebildet sein können. Die erste Kontaktfläche kann ebenfalls radialumfänglich außen eine Profilierung aufweisen. Dadurch kann die Kontaktfläche zwischen dem ersten und/oder zweiten Dichtelement und der ersten Fläche vermindert werden, wodurch die Reibungskräfte vermindert werden, wodurch eine Geräuschbildung vermieden werden kann. Zudem kann durch die Profilierung die Steifigkeit des zweiten Dichtelementes, insbesondere der ersten Auskragung, vermindert werden, wodurch dessen Flexibilität erhöht wird. Dadurch kann das Anliegen des zweiten Dichtelementes, insbesondere der ersten Auskragung, an die erste Fläche verbessert werden.

Insbesondere ist an dem ersten Dichtelement im Wesentlichen parallel zu der ersten Dichtlippe eine dritte Dichtlippe mit einer dritten Dichtkontur zur Kontaktierung einer zweiten Fläche der Kolben-Zylinder-Anordnung vorgesehen. Die dritte Dichtlippe kann radialumfänglich innenseitig des ersten Dichtelementes ausgebildet sein. Die dritte Dichtlippe kann entsprechend der ersten Dichtlippe durch eine zweite Auskragung der Armierung und/oder des zweiten Dichtelementes radial außenseitig abgestützt sein.

Bevorzugt ist die erste Dichtlippe als eine dynamische Dichtlippe und die dritte Dichtlippe als eine statische Dichtlippe ausgebildet. Zur Abstützung und Verbesserung der Dichtwirkung an einer dynamischen Dichtlippe, beispielsweise der ersten Dichtlippe, ist nur eine Auskragung mit einer zweiten Dichtungskontur nötig, wodurch der Dichtungsaufbau vereinfacht wird.

Die Erfindung betrifft einen Geberzylinder, umfassend mindestens eine vorstehend ausgebildete Dichtung.

Nachfolgend wird die Erfindung unter Bezugnahme auf die anliegenden Zeichnungen anhand eines bevorzugten Ausführungsbeispiels exemplarisch erläutert.

Es zeigen:
- Fig. 1:: eine Schnittansicht durch eine erfindungsgemäß ausgebildeten Dichtung in einem montiertem Zustand;
- Fig. 2:: die Dichtung aus Fig. 1 in einem nicht montiertem Zustand;
- Fig. 3:: eine Dichtung mit einem massiv ausgestalteten ersten Dichtelement;
- Fig. 4:: eine Dichtung mit einem reduzierten ersten Dichtelement;
- Fig. 5:: eine Dichtung mit einer stirnseitigen Umfassung der ersten Auskragung;
- Fig. 6:: eine Vergrößerung der Umfassung in Fig. 5 und
- Fig. 7:: eine Abwandlung der stirnseitigen Umfassung der ersten Auskragung.

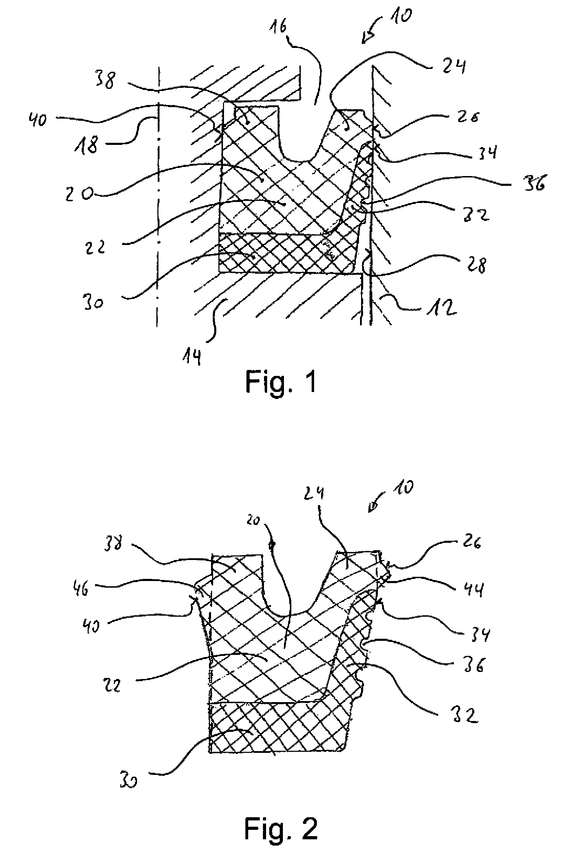

Die in Fig. 1 dargestellte Dichtung 10 ist in einem montierten Zustand dargestellt. Die Dichtung 10 ist in einem Spalt zwischen einem Gehäuse 12, beispielsweise einem Zylindergehäuse, und einem Kolben 14 zur Abdichtung eines Druckraumes 16 angeordnet. Die Dichtung 10 ist ringförmig um eine Achse 16 des Kolbens 14 herum angeordnet. Die Dichtung 10 ist in einer Aussparung des Kolbens 14 angeordnet. Die Dichtung 10 weist ein erstes Dichtungselement 20 auf, welches einen Grundkörper 22 umfasst, der auf einem dem Druckraum 16 abgewandten Seite des ersten Dichtelementes 20 angeordnet ist. Von dem Grundkörper 22 aus erstreckt sich in Richtung des Druckraumes 16 eine erste Dichtlippe 24, welche radialumfänglich außen eine erste Dichtkontur 26 aufweist. Die erste Dichtkontur 26 kontaktiert eine erste Fläche 28 des Gehäuses 12 der Kolben-Zylinder-Anordnung. Aufgrund der im Betrieb der Kolben-Zylinder-Anordnung auftretenden Relativbewegung zwischen dem ersten Dichtelement 20 und der ersten Fläche 28, wirkt das erste Dichtelement 20 als ein dynamisches Dichtelement. An dem Grundkörper 22 des ersten Dichtelementes 20 ist eine Armierung 30 in Form eines zweien Dichtelementes 30 angeordnet, wobei das zweite Dichtelement 30 ringförmig um die Achse 18 herum ausgebildet ist. Das zweite Dichtelement 30 weist radialumfänglich außen eine erste Auskragung 32 auf, welche in axialer Richtung entlang der ersten Dichtlippe 24 ausgebildet ist. Die erste Auskragung 32 reicht bis unmittelbar an die erste Dichtkontur 26 heran, wodurch die erste Dichtlippe 24 in axialer Richtung radialumfänglich außen überwiegend durch die erste Auskragung 32 umfasst wird. Die erste Auskragung 32 weist radialumfänglich außen eine zweite Dichtkontur 34 auf, welche die erste Fläche 28 zumindest teilweise kontaktiert und wie eine zweite Dichtlippe 32 wirkt. Die zweite Dichtkontur 34 weist eine Profilierung 36 auf, welche in Form von Rillen ausgebildet ist, wobei die Rillen ringförmig außenumfänglich um die Achse 18 herum ausgebildet sind. An dem ersten Dichtelement 20 ist radialumfänglich innen eine dritte Dichtlippe 38 mit einer dritten Dichtkontur 40 zur Kontaktierung einer zweiten Fläche 42, beispielsweise des Kolbens 14, ausgebildet. Die erste Dichtlippe 24 und die dritte Dichtlippe 38 bilden eine Nut-förmige Ausnehmung aus, durch welche eine selbstverstärkende Dichtwirkung bei einer Druckbeaufschlagung der Dichtung 10 erreicht wird.

In Fig. 2 ist die in oben beschriebene Dichtung 10 (Fig. 1) in einem nicht montierten Zustand dargestellt. Das erste Dichtungselement 20 ist radialumfänglich außen durch das zweite Dichtelement 30 bis auf die erste Dichtkontur 26 umfasst. An der nicht durch das Montieren komprimierten elastischen ersten Dichtlippe 24 ist radial außen an der ersten Dichtkontur 26 ein erster Wulst 44 angeordnet, welcher radialumfänglich ausgebildet ist. Beim Montieren der Dichtung 10 wird der Wulst 44 komprimiert, um den Anpressdruck an die erste Fläche 28 zu erhöhen. An der dritten Dichtlippe 38 ist radialumfänglich innenseitig an der dritten Dichtkontur 40 eine zweite Wulst 46 ausgebildet, welche radialumfänglich ausgebildet ist. Die erste Wulst 44 und die zweite Wulst 46 weisen unterschiedliche Querschnitte auf, da die erste Wulst 44 an einer dynamischen und die zweite Wulst 4 an einer statischen Dichtlippe angeordnet sind.

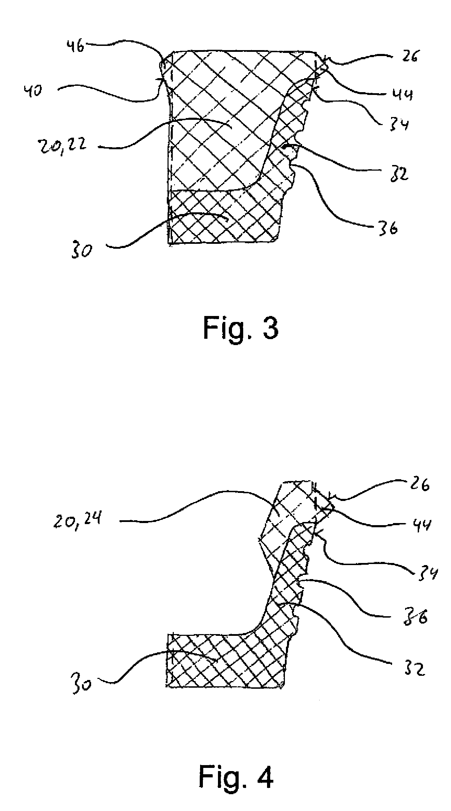

In Fig. 3 ist eine Dichtung 10 dargestellt, welche ein massives erstes Dichtelement 20 aufweist, wobei das erste Dichtelement 20 von dem zweiten Dichtelement zumindest teilwiese umschlossen ist. Die erste Dichtlippe 24 und die dritte Dichtlippe 38 des ersten Dichtelements 20 bilden mit dem Grundkörper 22 einen Körper. Die erste Dichtkontur 26 mit einem ersten Wulst 44 ist radialumfänglich außen ausgebildet und radialumfänglich innen die dritte Dichtkontur 40 mit dem zweiten Wulst 46.

Eine Dichtung 10 mit einem reduzierten ersten Dichtelement 20 ist in Fig. 4 dargestellt. Das erste Dichtelement 20 weist im Wesentlichen nur eine erste Dichtlippe 24 auf, welche zumindest teilweise radialumfänglich innen an der ersten Auskragung 32 und/oder zweiten Dichtlippe 32 angeordnet ist. Die erste Dichtkontur 26 ist dabei in Form des ersten Wulstes 44 ausgebildet.

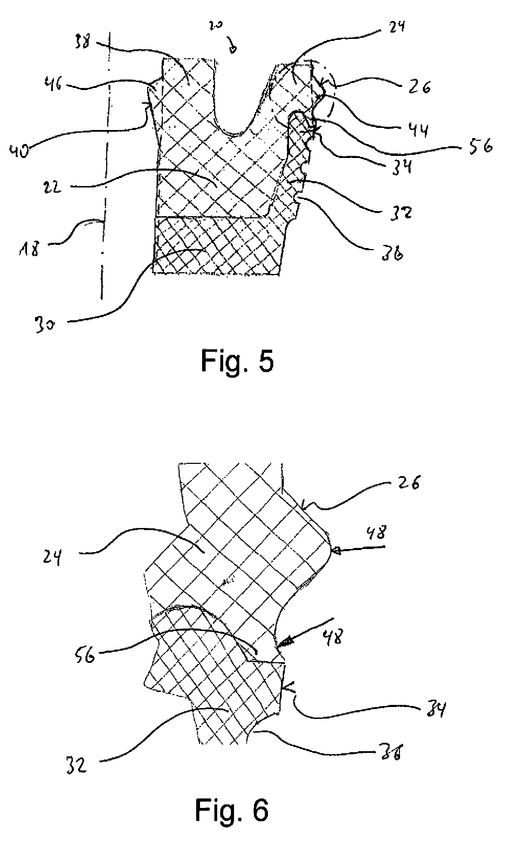

Die Dichtung 10 (Fig. 5) weist zusätzlich zu der in Fig. 2 beschriebenen Dichtung 10 eine besonders ausgestaltete erste Dichtlippe 24 auf. Die erste Dichtlippe 24 umfasst im Wesentlichen halbkreisförmig eine Stirnfläche der ersten Auskragung 32 und/oder der zweiten Dichtlippe 32. Die erste Auskragung 32 ist dabei an dem, der ersten Dichtkontur 26 zugewandten Ende radial nach innen abgewinkelt, wobei radial außen zur ersten Fläche 28 hin eine Aussparung 56 ausgeformt ist. Die erste Dichtlippe 24 umschließt dabei die erste Auskragung 32 derart, dass die erste Dichtlippe 24 radialumfänglich außen in der Aussparung 56 zwischen der ersten Auskragung 32 und der ersten Fläche 28 mündet.

Die stirnseitige Umfassung der ersten Auskragung 32 durch die erste Dichtlippe 24 (Fig. 6) erfolgt im Wesentlichen halbkreisförmig. Die erste Dichtlippe 24 mündet dabei radialumfänglich außen in einer Aussparung 56 der ersten Auskragung 32. Die zweite Dichtkontur 34 geht dabei im Wesentlichen oberflächenbündig in die erste Dichtkontur 26 über. Die erste Dichtkontur 26 bildet benachbart zu der zweiten Dichtkontur 34 eine Einschnürung mit einem ersten Radius 48 aus, wobei die Einschnürung fließend in den ersten Wulst 44 übergeht, welcher ebenfalls mit dem ersten Radius 48 ausgebildet ist.

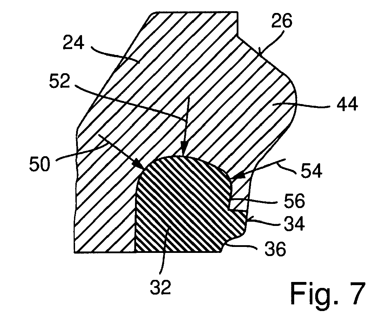

Eine besondere Ausgestaltung der in Fig. 6 dargestellten Umfassung der ersten Auskragung 32 ist in Fig. 7 gezeigt. Die erste Dichtlippe 24 umschließt die erste Auskragung 32 und/oder die zweite Dichtlippe 32 stirnseitig im Wesentlichen halbkreisförmig. Der Umschließungsbogen ist, von radial innen gesehen, zunächst mit einem zweiten Radius 50 nach radial außen gebogen, wobei der zweite Radius 50 in einen dritten Radius 52 übergeht und mit einem vierten Radius 54 im Wesentlichen parallel zu der zweiten Dichtkontur 34 radial außen in einer Aussparung 56 zur Aufnahme der ersten Dichtlippe 24 mündet. Dabei ist der dritte Radius 52 größer/gleich als der zweite Radius 50 und der zweite Radius 50 ist größer/gleich als der vierte Radius 54. Die radialumfängliche außenseitige Aussparung 56 weist einen axialen Abschnitt auf, welcher im Wesentlichen parallel zu der Achse 18 und/oder der zweiten Dichtkontur 34 ausgebildet ist und mindestens eine axiale Erstreckung aufweist, die der Tiefe der Aussparung 56 in radialer Richtung entspricht.

### Bezugszeichenliste

- 10: Dichtung
- 12: Gehäuse
- 14: Kolben
- 16: Druckraum
- 18: Achse
- 20: erstes Dichtelement
- 22: Grundkörper
- 24: erste Dichtlippe
- 26: erste Dichtkontur
- 28: erste Fläche
- 30: Armierung/ zweites Dichtelement
- 32: erste Auskragung/ zweite Dichtlippe
- 34: zweite Dichtkontur
- 36: Profilierung
- 38: dritte Dichtlippe
- 40: dritte Dichtkontur
- 42: zweite Fläche
- 44: erster Wulst
- 46: zweiter Wulst
- 48: erster Radius
- 50: zweiter Radius
- 52: dritter Radius
- 54: vierter Radius
- 56: Aussparung

## Patentansprüche

1. Geberzylinder zur Kupplungbetätigung mit einem Gehäuse (12), einem Kolben (14) und einer in einem Spalt zwischen dem Gehäuse (12) und dem Kolben (14) zur Abdichtung eines Druckraums (16) um eine Achse (18) des Kolbens (14) ringförmig angeordnete Dichtung (10), umfassend ein erstes Dichtelement (20), wobei das erste Dichtelement (20) einen Grundkörper (22) und mindestens eine erste Dichtlippe (24) aufweist, wobei die erste Dichtlippe (24) sich von dem Grundkörper (22) in Richtung eines Druckraumes (16) erstreckt und eine erste Dichtkontur (26) aufweist, wobei die erste Dichtkontur (26) das Gehäuse (12) zur Abdichtung kontaktiert, ferner umfassend eine als zweites Dichtelement (30) ausgebildeten Armierung, **dadurch gekennzeichnet, dass** die Armierung (30) an dem Grundkörper (22) des ersten Dichtelementes (20) anliegt und die Armierung (30) mindestens eine erste Auskragung (32) aufweist, die zwischen der ersten Dichtlippe (24) und dem Gehäuse (12) angeordnet, zumindest teilweise an der ersten Dichtlippe (24) anliegt und entlang der ersten Dichtlippe (24) bis an die erste Dichtkontur (26) heran ausgebildet ist, wobei die Armierung eine zweite Dichtkontur (34) zur Kontaktierung des Gehäuses (12) aufweist, und die zweite Dichtkontur (34) radial in Richtung des Gehäuses (12) eine Profilierung (36) in Form von Dellen und/oder Rillen aufweist.

2. Geberzylinder nach Anspruch 1, wobei die erste Dichtkontur (26) radial in Richtung des Gehäuses (12) wulstförmig ausgebildet ist.

3. Geberzylinder nach Anspruch 1 oder 2, wobei die erste Auskragung (32) druckraumseitig eine erste Stirnfläche aufweist, wobei die erste Stirnfläche im Wesentlichen halbkreisförmig von der ersten Dichtlippe (24) umfasst ist.

4. Geberzylinder nach einem der Ansprüche 1 bis 3, wobei das zweite Dichtelement (30) in Form einer Thermoplast-Dichtung ausgebildet ist.

5. Geberzylinder nach einem der Ansprüche 1 bis 4, wobei an dem ersten Dichtelement (20) im Wesentlichen parallel zu der ersten Dichtlippe (24) eine dritte Dichtlippe (38) mit einer dritten Dichtkontur (40) zur Kontaktierung des Kolbens (14) vorgesehen ist.

6. Geberzylinder nach Anspruch 5, wobei die erste Dichtlippe (24) als eine dynamische Dichtlippe und die dritte Dichtlippe (38) als eine statische Dichtlippe ausgebildet sind.

## Claims

1. Master cylinder for clutch actuation having a housing (12), a piston (14) and a seal (10) which is arranged in an annular manner about an axis (18) of the piston (14) in a gap between the housing (12) and the piston (14) in order to seal a pressure space (16), comprising a first sealing element (20), the first sealing element (20) having a main body (22) and at least one first sealing lip (24), the first sealing lip (24) extending away from the main body (22) in the direction of a pressure space (16) and having a first sealing contour (26), the first sealing contour (26) making contact with the housing (12) for sealing purposes, comprising, furthermore, a reinforcement which is configured as a second sealing element (30), **characterized in that** the reinforcement (30) bears against the main body (22) of the first sealing element (20), and the reinforcement (30) has at least one first projection (32) which is arranged between the first sealing lip (24) and the housing (12), bears at least partially against the first sealing lip (24), and is configured along the first sealing lip (24) as far as the first sealing contour (26), the reinforcement having a second sealing contour (34) for making contact with the housing (12), and the second sealing contour (34) having a profiling (36) radially in the direction of the housing (12) in the form of indentations and/or grooves.

2. Master cylinder according to Claim 1, the first sealing contour (26) being of bead-shaped configuration radially in the direction of the housing (12).

3. Master cylinder according to Claim 1 or 2, the first projection (32) having a first end face on the pressure space side, the first end face being enclosed in a substantially semi-circular manner by the first sealing lip (24).

4. Master cylinder according to one of Claims 1 to 3, the second sealing element (30) being configured in the form of a thermoplastic seal.

5. Master cylinder according to one of Claims 1 to 4, a third sealing lip (38) with a third sealing contour (40) for making contact with the piston (14) being provided on the first sealing element (20) substantially parallel to the first sealing lip (24).

6. Master cylinder according to Claim 5, the first sealing lip (24) being configured as a dynamic sealing lip, and the third sealing lip (38) being configured as a static sealing lip.

## Revendications

1. Maître-cylindre pour la commande d'embrayage comprenant un boîtier (12), un piston (14) et un joint d'étanchéité (10) disposé sous forme annulaire autour d'un axe (18) du piston (14) dans une fente entre le boîtier (12) et le piston (14) pour réaliser l'étanchéité d'un espace de pression (16), comprenant un premier élément d'étanchéité (20), le premier élément d'étanchéité (20) présentant un corps de base (22) et au moins une première lèvre d'étanchéité (24), la première lèvre d'étanchéité (24) s'étendant depuis le corps de base (22) dans la direction d'un espace de pression (16) et présentant un premier contour d'étanchéité (26), le premier contour d'étanchéité (26) venant en contact avec le boîtier (12) pour réaliser l'étanchéité, comprenant en outre un renforcement réalisé en tant que deuxième élément d'étanchéité (30), **caractérisé en ce que** le renforcement (30) s'applique au niveau du corps de base (22) du premier élément d'étanchéité (20) et le renforcement (30) présente au moins une première saillie (32) qui est disposée entre la première lèvre d'étanchéité (24) et le boîtier (12), s'applique au moins en partie contre la première lèvre d'étanchéité (24) et est réalisée le long de la première lèvre d'étanchéité (24) presque jusqu'au premier contour d'étanchéité (26), le renforcement présentant un deuxième contour d'étanchéité (34) pour venir en contact avec le boîtier (12), et le deuxième contour d'étanchéité (34) présentant, radialement dans la direction du boîtier (12), un profilage (36) sous forme de creux et/ou de rainures.

2. Maître-cylindre selon la revendication 1, dans lequel le premier contour d'étanchéité (26) est réalisé en forme de bourrelet radialement dans la direction du boîtier (12).

3. Maître-cylindre selon la revendication 1 ou 2, dans lequel la première saillie (32) présente du côté de l'espace de pression une première surface frontale, la première surface frontale étant sensiblement entourée sous forme semi-circulaire par la première lèvre d'étanchéité (24).

4. Maître-cylindre selon l'une quelconque des revendications 1 à 3, dans lequel le deuxième élément d'étanchéité (30) est réalisé sous la forme d'un joint d'étanchéité thermoplastique.

5. Maître-cylindre selon l'une quelconque des revendications 1 à 4, dans lequel une troisième lèvre d'étanchéité (38) comprenant un troisième contour d'étanchéité (40) pour venir en contact avec le piston (14) est prévue au niveau du premier élément d'étanchéité (20) essentiellement parallèlement à la première lèvre d'étanchéité (24).

6. Maître-cylindre selon la revendication 5, dans lequel la première lèvre d'étanchéité (24) est réalisée sous forme de lèvre d'étanchéité dynamique et la troisième lèvre d'étanchéité (38) est réalisée sous forme de lèvre d'étanchéité statique.
